# EUROPEAN PATENT APPLICATION

(11) **EP 2 846 452 A1**
(43) Date of publication of application: **11.03.2015**
(21) Application number: 14181546.4
(22) Date of filing: 20.08.2014
(51) Int. Cl.: H02M 7/483, H02J 3/36, H02J 1/10, H02H 7/26

(54) **Method for operating an electrical circuit and electrical circuit**

(30) Priority: 05.09.2013 DE 102013109714
(71) Applicant: GE Energy Power Conversion Technology Ltd, Rugby Warwickshire CV21 1BU (GB)
(72) Inventor: Janning, Joerg, 12277 Berlin (DE)
(74) Representative: Serjeants LLP

(57) **Abstract**

Described herein is a method for operating an electrical circuit, wherein a modular switch (21) comprising four power semiconductor components and one capacitor is provided. With this method, either both the first and the second power semiconductor components (V1, V2) are switched so as to be conducting, and both the third and the fourth power semiconductor components (V3, V4) are controlled so as to be blocking, so that a current (i) flows from the first connection (24) across the first power semiconductor component, across the capacitor (C) and across the second power semiconductor component to the second connection (25), or both the third and fourth power semiconductor components (V3, V4) are switched so as to be conducting, and both the first and the second power semiconductor components (V1, V2) are controlled so as to be blocking, so that the current (i) flows in reverse direction from the second connection (25) across the fourth power semiconductor component, across the capacitor (C) and across the third power semiconductor component to the first connection (24).

## Description

The invention relates to a method for operating an electrical circuit and a corresponding electrical circuit.

From publication DE 10 2010 046 142 A1 an electrical circuit has been known, said circuit being composed of a plurality of modular switches. As a result of an appropriate arrangement and activation of the power semiconductor components of the modular switches it is possible, in doing so, to embody the electrical circuit as a converter, i.e., for the conversion of a direct voltage into an alternating voltage, or vice versa. Consequently, the electrical circuit can be used, in particular, for the transmission of energy with high direct voltages.

Referring to DE 10 2010 046 142 A1, the current can flow across the modular switches in only one direction. Therefore, if the known electrical circuit is used, for example in high-voltage direct current (HVDC) transmission, this has the result that a reversal of the direction of energy transmission can be achieved only in that the direct voltage is reversed. However, in the case of a unipolar undersea cable this is possible only within considerable constraints.

It is the object of the present invention to improve the known electrical circuit.

The invention achieves this object with a method as in Claim 1 and Claim 4, as well as well as with an electrical circuit as in Claim 2.

The electrical circuit in accordance with the invention comprises at least one modular switch, wherein the modular switch is provided with a first series circuit comprising a first controllable power semiconductor component and a first diode, and with a second series circuit comprising a second diode and a second controllable semiconductor component; wherein the connecting point of the first power semiconductor component and the first diode form a first connection, and the connecting point of the second diode and the second power semiconductor component form a second connection of the modular switch; wherein, in the first series circuit, the first power semiconductor component is connected in parallel to a third diode, and the first diode is connected in parallel to a third controllable power semiconductor element; wherein, in the second series circuit, the second power semiconductor component is connected in parallel to a fourth diode, and the second diode is connected in parallel to a fourth controllable power semiconductor component; wherein the conducting directions of the third diode and the third power semiconductor component correspond to the conducting directions of the first diode and the first power semiconductor component, and the conducting directions of the fourth diode and the fourth power semiconductor component correspond to the conducting directions of the second diode and the second power semiconductor; wherein the modular switch is provided with a capacitor; and wherein the first series circuit and the second series circuit and the capacitor of the modular switch are connected in parallel relative to each other.

Referring to the method in accordance with the invention, either both the first and second power semiconductor components are connected so as to be conducting, and both the third and fourth power semiconductor components are controlled so as to be blocking, so that a current from the first connection flows across the first power semiconductor component, across the capacitor and across the second power semiconductor component to the second connection, or both the third and fourth power semiconductor components are connected so as to be conducting, and both the first and second power semiconductor components are controlled so as to be blocking, so that the current flows in reverse direction from the second connection across the fourth power semiconductor component, across the capacitor and across the third power semiconductor component to the first connection.

The invention features the advantage that the current can flow through the modular switches in both directions. This may be achieved with an appropriate activation of the modular switches. In doing so, it is possible for electrical energy in the form of a direct current to be carried in both directions across power converters that comprise the modular switches.

Referring to the electrical circuit in accordance with the invention, a voltage reversal of the direct voltage is not necessary. Among other things, this brings about the advantage that unipolar cables can be used in direct-voltage transmission.

If the invention is applied, for example, in the energy transmission of high direct voltages within a meshed direct-voltage network, it is possible to freely adjust the direct voltages that are used for energy transmission. In this manner, it is possible - even in the case of an error situation - to limit the direct voltage to one transmission section and to thus be able to respond to the error situation.

Furthermore, the invention features substantial advantages in error and short circuit situations. Therefore, if, in a meshed direct voltage network, as many as possible or all current converters are capable of changing the direct voltage and thus limit the direct current, it is possible - after an error or a short circuit has been detected - to first limit the error or short circuit current at the error or short circuit location with the use of the invention in order to subsequently, for example, completely break and galvanically separate the error current or short circuit current, for example with the help of common, already commercially available, circuit breakers.

Additional features, possibilities of use and advantages of the invention can be inferred from the description of the exemplary embodiments of the invention hereinafter, said exemplary embodiments being illustrated in the related figures. In doing so, the object of the invention is represented by each of the described or illustrated examples, individually or in any combination, and independently of their summarization or their citation or illustration in the description, or in the figures. They show in:
Figure 1 a schematic block circuit diagram of an exemplary embodiment of an electrical circuit;
Figures 2 and 3 sections of the electrical circuit of Figure 1;
Figure 4a a schematic block circuit diagram of an application of the electrical circuit of Figure 1; and
Figure 4b a schematic time-dependency diagram of current and voltage characteristics as in Figure 4a.

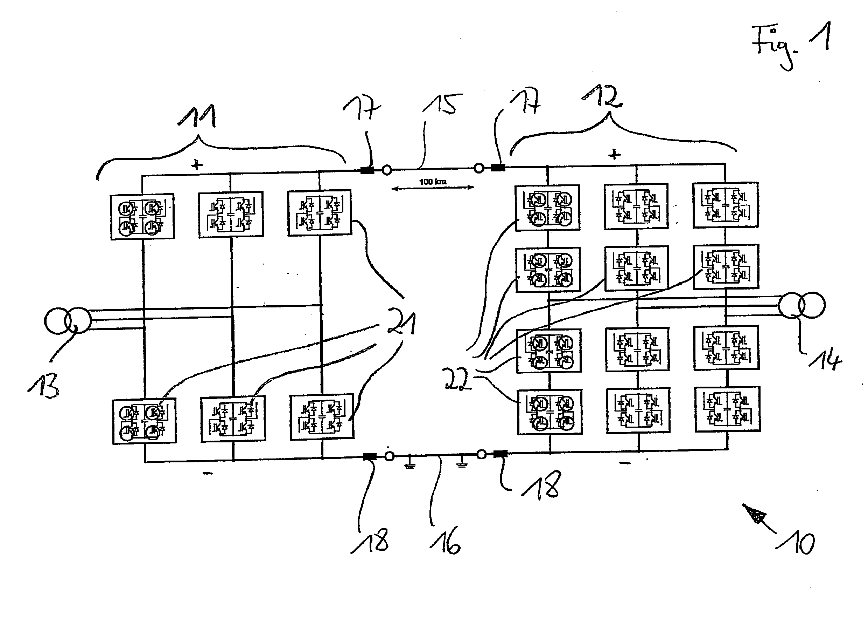

Figure 1 shows an electrical circuit 10 that can preferably be used within the framework of a so-called high-voltage direct current (HVDC) transmission. In particular, the circuit 10 may be used for connecting two existing electrical power supply networks in order to transmit electrical energy between the power supply networks in both directions. Hereinafter follows a description of the direction of the current flow during normal operation, i.e., for the operation in which the current flows through clocked power semiconductor components and not in their anti-parallel diodes. Other current flows in opposite directions are possible, however, they will not be specifically described here.

The circuit 10 comprises a first converter 11 and a second converter 12. The first converter 11 is connected to a first transformer 13 on its alternating-voltage side, and the second converter 12 is connected to a second transformer 14 on its alternating voltage side. Each of the converters 11, 12, the transformers 13, 14 and their electrical connections are three-phased in the present exemplary embodiment.

On their direct-voltage side, the two converters 11, 12 are connected to each other by way of two electrical lines 15, 16. Inductances 17, 18 may exist between the converters 11, 12 and the lines 15, 16.

Each of the two converters 11, 12 is disposed to convert a direct voltage into an alternating voltage, or vice versa. The two transformers 13, 14 are disposed to adapt the voltage on the alternating-voltage side of the respectively associate converter 11, 12 to the existing boundary conditions.

A direct voltage is applied between the two electrical lines 15, 16. Specifically, this is a high voltage, for example 320 kV. The length of the two lines 15, 16 may be several kilometers, for example 100 km. One of the two lines 15, 16, for example line 16, may be grounded. Preferably, a high-voltage direct current (HVDC) transmission can be implemented by way of the two lines 15, 16.

Each of the converters 11, 12 is composed of a plurality of modular switches 21, 22. Due to the exemplary three-phase embodiment, the modular switches 21, 22 in each of the two converters 11, 12 are arranged in three groups. Each of the groups of each converter 11, 12 includes the same number of modular switches 21, 22. As will still be explained hereinafter, a three-step embodiment of the respective converter requires, respectively, two modular switches 21, 22 per group, a five-step embodiment requires respectively four modular switches 21, 22, and so on.

It is understood that the number of phases of the circuit 10 may also be greater or smaller than three. Likewise, the number of phases of the two converters 11, 12 or the associate transformers 13, 14 may also be different. Likewise, the number of modular switches 21, 22 per group in the two converters 11, 12 may also be different. Instead of a transformer, it is also possible to use a throttle for a solution not using a transformer.

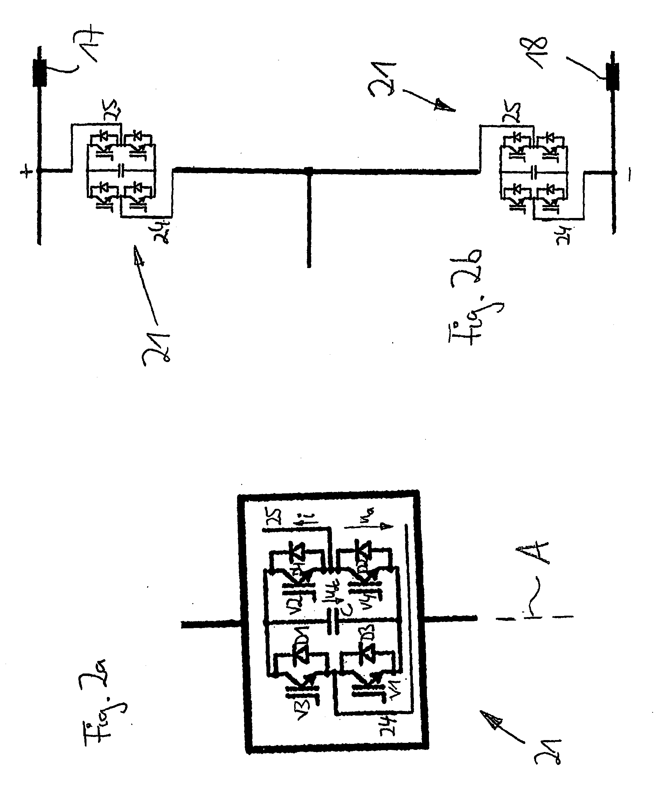

Figure 2a shows the modular switch 21 that is provided in the converter 11.

The modular switch 21 has a first series circuit comprising a first controllable power semiconductor component V1 and a first diode D1, as well as a second series circuit comprising a second diode D2 and a second controllable power semiconductor component V2.

In a first series circuit, the collector of the first power semiconductor component V1 and the anode of the first diode D1 are connected to each other. This connecting point is referred to as the first connection 24. In the second series circuit, the emitter of the second power semiconductor component V2 and the cathode of the second diode D2 are connected to each other. This connecting point is referred to as the second connection 25.

The two series circuits are connected in parallel relative to each other. Consequently, the cathode of the first diode D1 is connected to the collector of the second power semiconductor component V2, and the emitter of the first power semiconductor component V1 is connected to the anode of the second diode D2.

In the first series circuit, a third diode D3 is connected in parallel to the first power semiconductor component V1, and the first diode D1 is connected in parallel to a third power semiconductor component V3. The conducting directions of the third diode D3 and of the third power semiconductor component V3 correspond to the conducting directions of the first diode D1 and the first power semiconductor components V1. Correspondingly, the second power semiconductor component V2 is connected in parallel to a fourth diode D4, and the second diode D2 is connected in parallel to a fourth power semiconductor component V4.

A capacitor C is connected in parallel to the two series circuits that are connected in parallel.

A direct voltage u_{dc} is applied to the capacitor C, and a connecting voltage uₐ exists between the two connections 24, 25. The direction of the aforementioned voltages is indicated in Figure 2a. Furthermore, a current i flows from the first connection 24 in the direction to the second connection 25.

Referring to the power semiconductor components V1, V2, V3, V4, these are controllable switches, for example, transistors, in particular field effect transistors, or thyristors with an optionally required auxiliary protective element, in particular gate turn-off (GTO) thyristors or insulated gate bipolar transistors (IGBTs), or comparable electronic components. Depending on the embodiment of the power semiconductor components V1, V2, V3, V4, their connections may be identified in different ways. The aforementioned terms collector and emitter relate to the exemplary use of IGBTs. The capacitor C may be configured so as to be unipolar.

The modular switch 21 is able to assume the following states:
- If the power semiconductor components V1, V2, V3, V4 are switched off (blocking), the current i can flow either from the first connection 24 across the diode D1, across the capacitor C and across the diode D2 to the second connection 25 or, in reverse direction, from the second connection 25 across the diode D4, across the capacitor C and across the diode D3, to the first connection 24. In both cases, the capacitor C is charged by the flowing current i or by the reversely flowing current i so that the direct voltage u_{dc} becomes higher. Apart from the voltage drops on the diodes D1, D2 and D3, D4, respectively, the connecting voltage uₐ is equal to the negative direct voltage -u_{dc}, therefore uₐ = -u_{dc}, or equal to the positive direct voltage u_{dc}; therefore uₐ = u_{dc}.
- If both the power semiconductor components V1, V2 are switched on (conducting) and both the power semiconductor components V3, V4 are switched off (blocking), the current i - normal mode - flows from the first connection 24 across the first power semiconductor component V1, across the capacitor C and across the second power semiconductor component V2 to the second connection 25. The capacitor C is discharged by this current i so that the direct voltage u_{dc} decreases. Apart from the voltage drops on the power semiconductor components V1, V2, the connecting voltage uₐ is equal to the positive direct voltage u_{dc}; therefore uₐ = u_{dc}.

- If both the power semiconductor components V3, V4 are switched on (conducting) and both the power semiconductor components V1, V2 are switched off (blocking), the current i flows in reverse direction from the second connection 25 across the fourth power semiconductor component V4, across the capacitor C and across the third power semiconductor component V3 to the first connection 24. The capacitor C is discharged by this current 1, so that the direct voltage u_{dc} becomes lower. Apart from the voltage drops on the power semiconductor components V3, V4, the connecting voltage uₐ is equal to the negative direct voltage -u_{dc}.; therefore uₐ = -u_{dc}.
- If the first power semiconductor component V1 is switched on (conducting) and the power semiconductor components V2, V3, V4 are switched off (blocking), the current 1 flows from the first connection 24 across the first power semiconductor component V1 and across the second diode D2 to the second connection 25. The direct voltage u_{dc} on the capacitor C remains constant. Apart from the voltage drops on the first power semiconductor component V1 and the second diode 2, the connecting voltage uₐ is equal to zero; therefore uₐ = 0.
- If the power semiconductor components V1, V3, V4 are switched off (blocking)and the second power semiconductor component V2 is switched on (conducting), the current i flows from the first connection 24 across the first diode D1 and the second power semiconductor component V2 to the second connection 25. The direct voltage u_{dc} on the capacitor C remains constant. Apart from the voltage drops on the first diode D1 and the second power semiconductor component V2, the connecting voltage uₐ is equal to zero; therefore uₐ = 0.
- If the third power semiconductor component V3 is switched on (conducting) and the power superconductor components V1, V2, V4 are switched off (blocking), the current i flows in reverse direction from the second connection 25 across the fourth diode D4 and across the third power semiconductor component V3 to the first connection 24. The direct voltage u_{dc} on the capacitor C remains constant. Apart from the voltage drops on the third power semiconductor component V3 and the fourth diode D4, the connecting voltage uₐ is equal to zero; therefore uₐ = 0.
- If the power semiconductor components V1, V2, V3 are switched off (blocking) and the fourth power semiconductor component V4 is switched on (conducting), the current i flows in reverse direction from the second connection 25 across the fourth power semiconductor component V4 and the third diode D3 to the first connection 24. The direct voltage u_{dc} on the capacitor C remains constant. Apart from the voltage drops on the third diode D3 and the fourth power semiconductor component V4, the connecting voltage uₐ is equal to zero; therefore uₐ = 0.

Consequently, the current through the modular switch 21 is able to flow in both directions.

In both cases, i.e., independent of the direction in which the current flows through the modular switch 21, the connecting voltage uₐ can essentially assume three values, i.e., uₐ = -u_{dc} or uₐ = u_{dc} or uₐ = 0. In doing so, the direct voltage u_{dc} on the capacitor C may increase or decrease.

Figure 2b shows how the modular switch 21 of Figure 2a is switched within one of the groups of the converter 11. In doing so, the right group of the converter 11 of Figure 1 is shown as an example. The other groups of the converter 11 are configured accordingly.

Figure 2b shows two modular switches 21 per group as an example. In accordance with Figure 2b, the two modular switches 21 are connected in series. The connection 25 of the upper modular switch 21 is connected to a positive pole of the converter 11 on the direct-voltage side and thus connected to the line 15. The connection 24 of the lower modular switch is connected to a negative pole of the converter 11 on the direct-voltage side and thus connected to line 16. The connecting point of the two modular switches 21 represents the associate phase of the converter 11 on the alternating-voltage side and is connected to the transformer 13.

The explained embodiment of the converter 11 means that the converter 11 is a three-phase converter. The voltage of the associate alternating-voltage side phase of the converter 11 can thus essentially assume a positive state or a negative state, or a zero state.

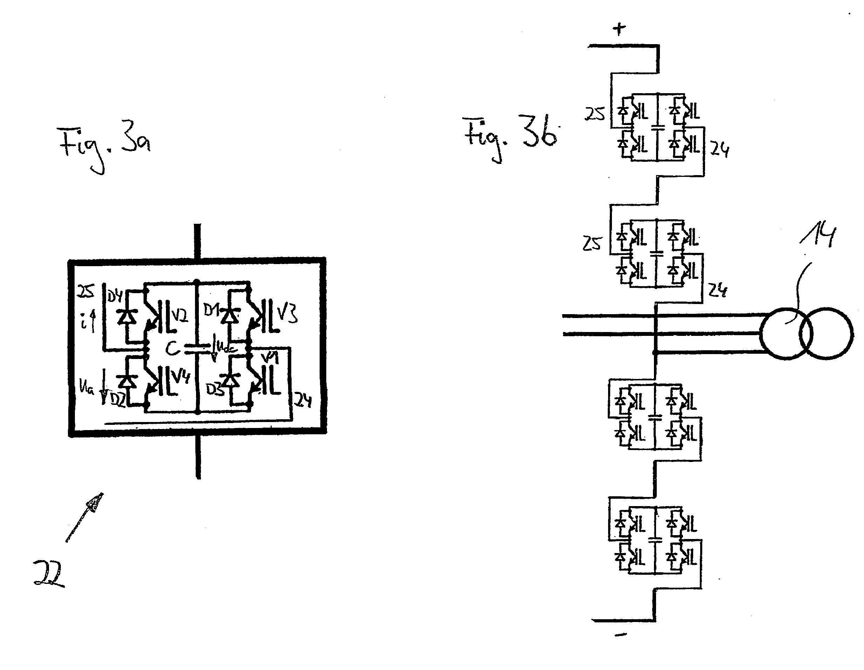

Referring to Figure 3a, the modular switch 22 is shown comprising the converter 12.

Considering its design, the modular switch 22 of Figure 3a essentially corresponds to the modular switch 21 of Figure 2a. When visualized, the modular switch 22 of Figure 3a represents a specular view of the modular switch 21 of Figure 2a on plane A of Figure 2a. Therefore, considering the design and the function of the modular switch 22 of Figure 3a, reference is made to the explanations regarding the modular switch 21 of Figure 2a hereinabove.

Figure 3b illustrates how the modular switch 22 of Figure 3a is connected within one of the groups of the converter 12. For example, the right group of the converter 12 of Figure 1 is shown. The other groups of the converter 12 are designed accordingly.

Figure 3b shows the provision of four modular switches 22 per group as an example. In accordance with Figure 3b, the four modular switches 22 are connected in series. The connection 25 of the uppermost modular switch 22 is connected to the positive pole of the converter 12 on the direct-voltage side and thus connected to the line 15. The connection 24 of the uppermost modular switch 22 is connected to the connection 25 of the modular switch 22 connected underneath. The connection 24 of the lowermost modular switch is connected to a negative pole of the converter 12 on the alternating-voltage side 12 and is thus connected to the line 16. The connection 25 of the lowermost modular switch 22 is connected to the connection 24 of the modular switch 22 connected thereabove. The connecting point of the two middle modular switches 22 represents the associate phase on the alternating-voltage side of the converter 12 and is thus connected to the transformer 14.

The explained embodiment of the converter 12 means that the converter 12 is configured so as to have five phases. This means that the voltage of each alternating-voltage-side phase of the converter 12 can essentially assume a high positive state or a mean positive state, or a high negative state or a mean negative state, or a zero state.

The electrical circuit 10 of Figure 1 is associated with a not illustrated control device. This control device may be provided directly at the individual power semiconductor components or in a central location independent of the power semiconductor components. Likewise, it is possible for a plurality of control devices to be provided, said devices being locally distributed and, for example, hierarchically set up.

This (these) control device(s) activates (activate) the power semiconductor components of the electrical circuit 10 in a clocked manner such that each of the modular switches 21, 22 provided in the converters 11, 12 assumes one of the explained states. The selection of the respectively to be activated state of the individual modular switch 21, 22, in doing so, is a function of the direction in which the current i is to flow through the respective modular switch 21, 22, as well as of the connecting voltage uₐ that is to exist on the respective modular switch 21, 22. As a function of a change of the connecting voltage uₐ, the current i flowing across the modular switch 21, 22 also changes.

Considering the explained electrical circuit 10, the power semiconductor components V1, V2, V3, V4 of the modular switches 21, 22 are always activated only in pairs in a clocked manner. Consequently, depending on the direction of the current flow, the power semiconductor components V1, V2 are controlled in a clocked manner in conducting mode, and the other two power semiconductor components remain switched off or blocked, or vice versa. This paired activation of either the two power semiconductor components V1, V2 or the two power semiconductor components V3, V4 is consistent with the second and third states, as has been described hereinabove regarding the power semiconductor components. When clocking a power semiconductor pair V1-V2, the power semiconductor components V1 and V2 are individually switched on and off. The power semiconductor components V1 and V2 may be conductive synchronously or asynchronously. (Possible states are: V1 and V2 Off, V1 or V2 Off, as well as V1 and V2 On.)

With the clocked activation of the two power semiconductor components as well as by switching off the respectively other two power semiconductor components, the direct current in the respective direction of the current flow can be controlled or regulated so as to meet the desired values.

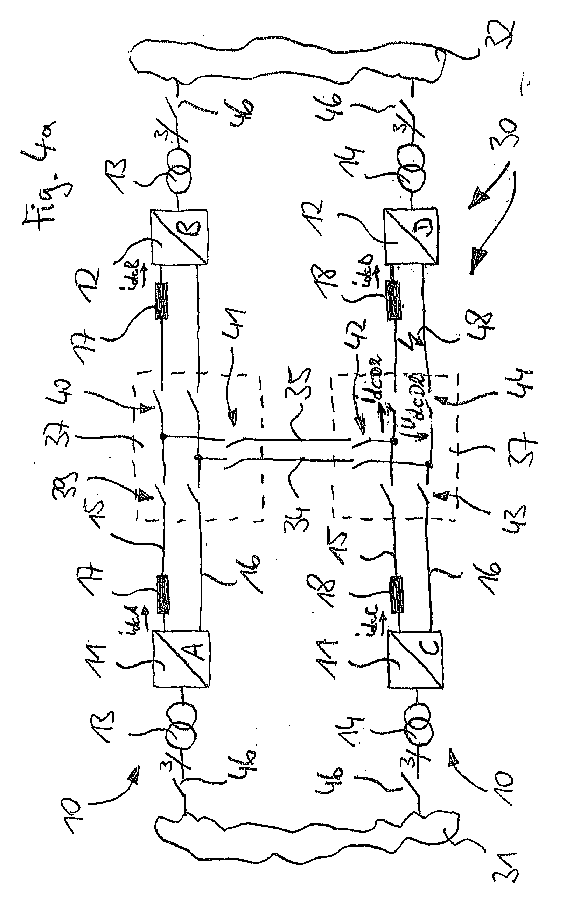

Figure 4a shows a meshed network 30 that is used as an example of two electrical power supply networks 31, 32 - that are connected to each other - and that represents an example of the design of two electrical circuits 10. It is understood that the meshed network 30 may also be designed differently, for example in the form of a star. Likewise, it is understood that the meshed network 30 may also comprise more or fewer converters, compared with Figure 4a.

Considering the electrical converters of the meshed network 30 of Figure 4a, reference is made to the explanations regarding Figures 1 through 3 hereinabove. In doing so, the same types of components are identified with the same reference signs.

In the meshed network 30 of Figure 4a, the two electrical lines 15, 16 of the two electrical circuits 10 are connected to each other by two transverse lines 34, 35.

Furthermore, two switching systems 37 are provided, said systems comprising pairs of electrical circuit breakers 39, 40, 41, 42, 43, 44 with which the electrical lines 15, 16 of the two electrical circuits 10, as well as the two transverse lines 34, 35, can be interrupted.

The two power supply networks 31, 32 are connected by way of additional electrical circuit breakers 46 to the transformers 13, 14 on the alternating-voltage side of the converters 11, 12.

Each of the four converters 11, 12 shown as examples in Figure 4a can be at a distance of several hundred kilometers from each other, for example 100 km. The two switching systems 37 can also be at a distance of several kilometers from each other, for example 100 km.

It is pointed out that, depending on the individual application, potentially not all the circuit breakers 39, 40, 41, 42, 43, 44 are required. For example, it is possible that the circuit breakers 41, 42 provided in the two transverse lines 34, 35 are not necessary.

The four converters 11, 12 of Figure 4a are consecutively numbered with the additional reference signs A, B, C, D. The four currents i_{dcA}, i_{dcB}, i_{dcC} and i_{dcD} in Figure 4a are plotted accordingly. Furthermore, another voltage u_{dcD2} and a current i_{dcD2} are indicated upstream of the circuit breaker, said circuit breaker connecting the converter D to the DC network.

In normal operating mode of the meshed network 30, all the circuit breakers are closed or switched so as to be conducting. Therefore, referring to the exemplary embodiment depicted in Figure 4a, the following applies to the normal operation of the meshed network 30: i_{dcA} + i_{dcC} = i_{dcB} + i_{dcD}. In doing so, the four converters A, B, C, D of Figure 4a are activated in a clocked manner in accordance with the descriptions of Figures 1 through 3, and are controlled or regulated in this manner to meet the desired values of the aforementioned equation.

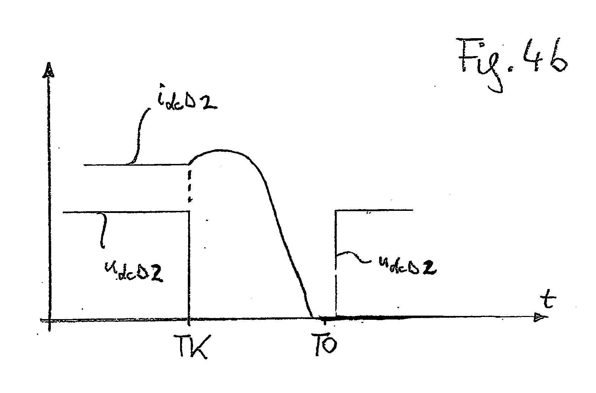

If now an error, for example a short circuit, occurs in the electrical lines 15, 16 to the converter D of the meshed network 30 of Figure 4a at a time TK, as is indicated for example by an arrow 48, this results in current and voltage characteristics as shown in Figure 4b.

In Figure 4b the characteristics of the current i_{dcD2} and the voltage u_{dcD2} are plotted over time t. It is assumed that each, the current i_{dcD2} and the voltage u_{dcD2}, initially display an essentially constant value.

The mentioned short circuit occurs at the time TK. Consequently, the voltage u_{dcD2} becomes zero.

With the aid of the converter D associated with the short circuit and the other converters A, B, C, the currents i_{dcD2} and i_{dcD} are now controlled or regulated in such a manner that this current will optionally first increase in order to then decrease to zero, or at least to almost zero. Therefore, essentially the following applies: i_{dcD} = 0 and i_{dcD2} = 0.

This requires a higher-level control or regulation of the converters, said control or regulation adjusting the set point values for the currents i_{dcA}, i_{dcB}, i_{dcC} and i_{dcD} in such a manner that the currents i_{dcD2} and i_{dcD} are decreased to approximately zero. The control or regulation of the individual converters converts these higher-level default set point values with the aid of the described modules 21, 22, as well as with the accordingly clocked actuation of the power semiconductor components. The higher-level control or regulation of the converters can be centrally accommodated, e.g., in the circuit system or decentrally in the individual converters. In both cases, communication paths exhibiting sufficient transmission speed are required.

After the current i_{dcD} has become approximately zero, the circuit breakers 44 associated with the short circuit 48 or the converter D are opened. The line section affected by the short circuit was thus selectively switched off and galvanically separated from the meshed network. Furthermore, it is now possible to also open the circuit breaker 46, unless this has already been initiated earlier by the higher-level control or regulation of the converters. The time-dependency diagram of Figure 4b shows this, for example, at a time TO. Then, the following applies: i_{dcA} + i_{dcC} = i_{dcB}. This means that the operation of the meshed network 30 is continued based on the aforementioned equation. In doing so, the three converters A, B, C are activated in a clocked manner consistent with the explanations regarding Figures 1 through 3 and, in this manner, are controlled or regulated to meet the desired values of the aforementioned equation.

After the said circuit breakers 44 have been opened, the voltage u_{dcD2} can again increase to the initial, approximately constant, value in accordance with Figure 4b, provided this is desirable or necessary. Alternatively, the voltage u_{dcD2} of the converters A, B, C can also be adjusted in a different way.

In accordance with the time-dependency diagram of Figure 4b, the voltage u_{dcD2} that has become zero has an effect on the meshed network 30 only starting at time TK, i.e., before the occurrence of the short circuit, up to the time TO, i.e., the opening of the associate circuit breaker 44. By appropriately fast control or regulation of the converter D, this time segment can be limited to a small value, for example, smaller than 100 milliseconds. Consequently, the short circuit 48 has similar effects on the remaining converters A, B, C and the energy supply networks 31, 32 connected to these converters, as would be the case with the occurrence of a short circuit in a conventional three-phase power system and can thus be managed without substantial interruption of the energy transmission.

Consequently, following the short circuit 48 in the region of the converter D, the operation of the meshed network 30 is taken over and continued by the remaining converters A, B, C.

Described herein is a method for operating an electrical circuit, wherein a modular switch 21 comprising four power semiconductor components and one capacitor is provided. With this method, either both the first and the second power semiconductor components V1, V2 are switched so as to be conducting, and both the third and the fourth power semiconductor components V3, V4 are controlled so as to be blocking, so that a current i flows from the first connection 24 across the first power semiconductor component, across the capacitor C and across the second power semiconductor component to the second connection 25, or both the third and fourth power semiconductor components V3, V4 are switched so as to be conducting, and both the first and the second power semiconductor components V1, V2 are controlled so as to be blocking, so that the current i flows in reverse direction from the second connection 25 across the fourth power semiconductor component, across the capacitor C and across the third power semiconductor component to the first connection 24.

## Claims

1. Method for operating an electrical circuit,
wherein the electrical circuit (10) comprises at least one modular switch (21, 22),
wherein the modular switch (21, 22) is provided with a first series circuit comprising a first controllable power semiconductor component (V1)and a first diode (D1), and with a second series circuit comprising a second diode (D2)and a second controllable semiconductor component (V2);
wherein the connecting point of the first power semiconductor component (V1) and the first diode (D1) form a first connection (24) of the modular switch (21, 22), and the connecting point of the second diode (D2) and the second power semiconductor component (V2) form a second connection (25) of the modular switch (21, 22);
wherein, in the first series circuit, the first power semiconductor component (V1) is connected in parallel to a third diode (D3), and the first diode (D1) is connected in parallel to a third controllable power semiconductor element (V3);
wherein, in the second series circuit, the second power semiconductor component (V2) is connected in parallel to a fourth diode (D4), and the second diode (D2) is connected in parallel to a fourth controllable power semiconductor component (V4);
wherein the conducting directions of the third diode (D3) and the third power semiconductor component (V3) correspond to the conducting directions of the first diode (D1) and the first power semiconductor component (V1), and the conducting directions of the fourth diode (D4) and the fourth power semiconductor component (V4) correspond to the conducting directions of the second diode (D2) and the second power semiconductor (V2);
wherein the modular switch (21, 22) is provided with a capacitor (C); and
wherein the first series circuit and the second series circuit and the capacitor (C) of the modular switch (21, 22) are connected in parallel relative to each other,
**characterized in that**
either the first and the second power semiconductor components (V1, V2) are switched, individually or together, so as to be conducting, and both the third and the fourth power semiconductor components (V3, V4) are switched so as to be blocking, so that a current (i) flows from the first connection (24) across the first power semiconductor component (V1), across the capacitor (C) and across the second power semiconductor component (V2) to the second connection (25), or that both the third and fourth power semiconductor components (V3, V4) are switched so as to be conducting, and both the first and the second power semiconductor components (V1, V2) are switched so as to be blocking, so that the current (i) flows in reverse direction from the second connection (25) across the fourth power semiconductor component (V4), across the capacitor (C) and across the third power semiconductor component (V3) to the first connection (24).

2. Electrical circuit (10) comprising at least one modular switch (21, 22),
wherein the modular switch (21, 22) is provided with a first series circuit comprising a first controllable power semiconductor component (V1) and a first diode (D1), and with a second series circuit comprising a second diode (D2)and a second controllable semiconductor component (V2);
wherein the connecting point of the first power semiconductor component (V1) and the first diode (D1) form a first connection (24) of the modular switch (21, 22), and the connecting point of the second diode (D2) and the second power semiconductor component (V2) form a second connection (25) of the modular switch (21, 22);
wherein, in the first series circuit, the first power semiconductor component (V1) is connected in parallel to a third diode (D3), and the first diode (D1) is connected in parallel to a third controllable power semiconductor element (V3);
wherein, in the second series circuit, the second power semiconductor component (V2) is connected in parallel to a fourth diode (D4), and the second diode (D2) is connected in parallel to a fourth controllable power semiconductor component (V4);
wherein the conducting directions of the third diode (D3) and the third power semiconductor component (V3) correspond to the conducting directions of the first diode (D1) and the first power semiconductor component (V1), and the conducting directions of the fourth diode (D4) and the fourth power semiconductor component (V4) correspond to the conducting directions of the second diode (D2) and the second power semiconductor (V2);
wherein the modular switch (21, 22) is provided with a capacitor (C); and
wherein the first series circuit and the second series circuit and the capacitor (C) of the modular switch (21, 22) are connected in parallel relative to each other.

3. Electrical circuit (10) according to claim 2, wherein a plurality of the modular switches (21, 22) form at least one converter (11, 12).

4. Method for operating a meshed network (39), wherein the meshed network (30) comprises at least one electrical circuit (10) according to claim 3, **characterized in that**, in case of an error, the current (i_{dc}) on the direct-voltage side of the at least one converter is controlled or regulated essentially to zero with the aid of the modular switch (21, 22).

5. Method according to claim 4, wherein the circuit breaker is opened when the current (i_{dc}) is essentially at zero.

6. Method according to any of claims 1, 4 and 5, wherein the power semiconductor components (V1, V2, V3, V4) are activated in pairs in a clocked manner.
